# FASCICULE DE BREVET EUROPEEN

(11) **EP 3 582 986 B1**
(45) Date de publication et mention de la délivrance du brevet: **01.09.2021**
(21) Numéro de dépôt: 18706227.8
(22) Date de dépôt: 13.02.2018
(51) Int. Cl.: B60J 10/79, B60J 10/88

(54) **DISPOSITIF VITRE AFFLEURANT POUR PORTE DE VEHICULE, PORTE, VEHICULE AUTOMOBILE, PROCEDE DE FABRICATION ET DISPOSITIF D'ETANCHEITE MONOBLOC CORRESPONDANTS**
VORRICHTUNG ZUR BÜNDIGEN VERGLASUNG FÜR EINE FAHRZEUGTÜR, TÜR, KRAFTFAHRZEUG UND ENTSPRECHENDES HERSTELLUNGSVERFAHREN SOWIE EINSTÜCKDICHTUNGSVORRICHTUNG
FLUSH GLAZED DEVICE FOR A VEHICLE DOOR, DOOR, MOTOR VEHICLE, AND CORRESPONDING PRODUCTION METHOD AND SINGLE-PIECE SEALING DEVICE

(30) Priorité: 15.02.2017 FR 1751224
(43) Date de publication de la demande: 25.12.2019
(73) Titulaire: Advanced Comfort Systems France SAS - ACS France, 79302 Bressuire Cedex (FR); Cooper Standard France S.A.S., 35043 Rennes (FR)
(72) Inventeur: CHARGE, Philippe, 79300 Bressuire (FR); GRAS, Patrice, 35500 Saint M'Herve (FR)
(74) Mandataire: Vidon Brevets & Stratégie
(86) Numéro de dépôt international: PCT/EP2018/053577
(87) Numéro de publication internationale: WO 2018/149832

(56) Documents cités:
- EP-A2- 0 512 673
- DE-A1-102016 002 469
- DE-B3-102016 200 475
- US-A- 4 608 779

## Description

### 1. Domaine de l'invention

Le domaine de l'invention est celui des véhicules automobiles.

Plus précisément, l'invention concerne les portes de véhicule, et en particulier l'équipement de baies ménagées dans de telles portes.

Plus précisément encore, l'invention concerne les portes de véhicule équipées d'au moins un panneau vitré mobile sensiblement verticalement, notamment pour passer d'une position fermée à une position ouverte dans laquelle il pénètre intégralement ou partiellement dans un caisson inférieur de carrosserie (le panneau mobile pouvant, bien sûr, prendre généralement, une pluralité de positions intermédiaires).

Une telle porte de véhicule peut notamment être une porte latérale, mais l'invention peut également s'appliquer, par exemple, aux portes battantes et/ou coulissantes d'un véhicule, y compris les portes arrière, les hayons...

### 2. Art antérieur

Des exemples de tels dispositifs vitrés sont décrits notamment dans les documents de brevet EP 0 778 168 DE 10 2016 200475, EP 0 512 673, US 4 608 779, DE 10 2016 002469 et EP 0 857 844.

Selon cette approche, un cadre est prévu, du côté orienté vers l'intérieur du véhicule, portant un ou plusieurs (classiquement deux) rails, coopérant avec des patins solidaires du panneau vitré mobile, et fixés sur la face de celui-ci orientée vers l'intérieur du véhicule. Le cadre peut, le cas échéant, être tronqué et être limité à des montants portant les rails.

Cette technique est intéressante, car elle permet de concevoir des designs originaux, du fait de la suppression du cadre de porte classique, tout en conservant un guidage et un maintien efficaces du panneau mobile.

Le document de brevet FR 2 872 094 présente une technique permettant de réaliser des portes de véhicule automobile sur lesquelles la surface vitrée est affleurante (c'est-à-dire selon lequel aucun cadre n'apparaît vu de l'extérieur) et consistant à fabriquer séparément une structure de porte et un ensemble vitré qui sont assemblés par superposition pour former une porte de véhicule.

Bien que ce principe soit intéressant, les moyens assurant l'étanchéité d'une telle porte sont peu aisés à fabriquer (de par leur forme complexe) et à assembler.

Par ailleurs, une telle porte de véhicule nécessite encore l'assemblage d'un nombre important de pièces, ce qui va à l'encontre des objectifs de réduction de poids et d'encombrement des dispositifs vitrés.

### 3. Objectifs de l'invention

La présente invention a pour but de solutionner les faiblesses de cette technique antérieure.

L'invention a pour objectif de fournir une telle porte de véhicule présentant un aspect affleurant en elle même et avec les carrosseries, et qui présente une bonne qualité de structure et d'étanchéité.

Plus précisément, un objectif de l'invention est de fournir un dispositif vitré pour la réalisation d'une porte de véhicule, qui soit simple à mettre en œuvre et à assembler, par exemple, sur une chaîne de montage.

Un autre objectif est de fournir un procédé de fabrication d'une portière pour véhicule automobile, qui soit simple et rapide à mettre en œuvre.

Par ailleurs, un autre objectif de l'invention est de fournir un tel dispositif vitré, qui puisse être aisément maintenu ou remplacé, par exemple, suite à un accident.

### 4. Exposé de l'invention

Ces objectifs, ainsi que d'autres qui apparaîtront par la suite, sont atteints à l'aide d'un dispositif vitré destiné à être assemblé à un caisson de porte pour former une porte de véhicule automobile, le dispositif vitré comprenant un cadre présentant une traverse supérieure reliant deux montants formé chacun par un rail de guidage en coulissement d'au moins un panneau vitré mobile, entre une position d'obturation et au moins une position d'ouverture, ledit panneau vitré mobile portant, sur sa face orientée vers l'intérieur du véhicule, au moins un patin de guidage monté coulissant par rapport à un desdits rails de guidage.

Selon l'invention, le dispositif vitré comprend en outre un joint d'étanchéité présentant une partie supérieure rigide formant ladite traverse supérieure du cadre, ladite partie supérieure du joint d'étanchéité portant des premiers moyens d'étanchéité destinés à venir en contact avec la carrosserie du véhicule lorsque la porte est fermée, et des seconds moyens d'étanchéité destinés à venir en contact avec le panneau vitré mobile.

En outre, ladite partie supérieure, les premiers moyens d'étanchéité de porte et les seconds moyens d'étanchéité de vitre du joint d'étanchéité sont fabriqués en une seule pièce.

On réalise ainsi de façon simple un dispositif vitré qui est destiné à venir se positionner sur une structure de porte en prévoyant deux niveaux d'étanchéité :
- entre le panneau mobile vitré et le cadre du dispositif vitré, ce dernier étant formé par les rails de guidage du panneau mobile vitré et une partie du joint d'étanchéité formant traverse reliant les extrémités supérieures des rails, et
- entre le cadre du dispositif vitré et la carrosserie du véhicule une fois que le dispositif vitré est monté sur la structure de porte et que la porte est fixée sur le véhicule.

Ainsi, il est possible d'avoir un fonctionnement efficace et une obturation étanche, pour chaque dispositif vitré et chaque porte, malgré les tolérances nécessaires pour la fabrication et le montage des véhicules.

En outre, le joint d'étanchéité est monobloc et est, par exemple, obtenu par extrusion.

Par ailleurs, la partie supérieure du joint d'étanchéité est rigide et forme seule la traverse du cadre du dispositif vitré sur laquelle viennent se fixer les rails de guidage .

Selon l'invention, ledit joint d'étanchéité comprend deux pattes de fixation des rails de guidage audit joint d'étanchéité.

Selon l'invention, les deux pattes de fixation sont surmoulées sur ledit joint d'étanchéité.

Selon un aspect particulier de l'invention, ledit joint d'étanchéité comprend deux branches s'étendant parallèlement à partir de la partie supérieure et portant chacune des premiers moyens d'étanchéité de porte et des seconds moyens d'étanchéité de vitre.

Selon un aspect particulier de l'invention, chacune des deux branches est solidaire d'un desdits rails de guidage.

Dans un mode de réalisation particulier de l'invention, les branches sont solidarisées par clippage sur lesdits rails de guidage.

Selon un aspect particulier de l'invention, les premiers moyens d'étanchéité sont disposés sur la face supérieure de la partie supérieure du joint d'étanchéité et en ce que les seconds moyens d'étanchéité sont disposés sur la face inférieure de la partie supérieure du joint d'étanchéité.

Selon un aspect particulier de l'invention, ladite partie supérieure du joint d'étanchéité comprend une gorge intérieure dans laquelle est destinée à venir se loger un bord du caisson de porte.

Selon un aspect particulier de l'invention, ladite gorge intérieure est située entre la face supérieure et la face inférieure de ladite partie supérieure du joint d'étanchéité.

Selon un aspect particulier de l'invention, le dispositif vitré comprend une traverse inférieure reliant les deux rails de guidage en leur partie inférieure et destinée à venir se fixer sur le caisson de porte.

L'invention concerne également les portes de véhicule automobile, comprenant un dispositif vitré selon les caractéristiques décrites ci-dessus, ainsi que les véhicules automobiles comprenant au moins un tel dispositif vitré.

L'invention concerne, par ailleurs, un procédé de fabrication d'une porte de véhicule automobile, comprenant les étapes suivantes :
- fabrication d'un caisson de porte ;
- fabrication d'un dispositif vitré comprenant au moins un panneau vitré mobile et des rails de guidage en coulissement dudit panneau vitré mobile entre une position d'obturation et au moins une position d'ouverture, ledit panneau vitré mobile portant, sur sa face orientée vers l'intérieur du véhicule, au moins un patin de guidage monté coulissant par rapport à un desdits rails de guidage, lesdits rails de guidage étant reliés en leur partie supérieure par une traverse supérieure formée par la partie supérieure rigide d'un joint d'étanchéité,
- assemblage dudit caisson de porte et dudit dispositif vitré,
l'étape de fabrication du dispositif vitré comprenant une étape de fabrication, en une seule pièce, de la partie supérieure formant traverse, de premiers moyens d'étanchéité de porte destinés à venir en contact avec la carrosserie du véhicule lorsque la porte est fermée, et de seconds moyens d'étanchéité de vitre destinés à venir en contact avec le panneau vitré mobile.

Ce procédé de fabrication d'une portière pour véhicule automobile est simple et rapide à mettre en œuvre.

Selon l'invention, l'étape de fabrication du dispositif vitré comprend en outre une étape de pose des rails de guidage sur les deux pattes de fixation surmoulées sur le joint d'étanchéité.

Dans un mode de réalisation particulier de l'invention, les rails de guidage sont fixés sur les deux pattes de fixation par vissage, rivetage, ou clippage.

Selon un aspect particulier de l'invention, l'étape d'assemblage dudit caisson de porte et dudit dispositif vitré comprend une étape d'insertion d'un bord du caisson de porte dans une gorge intérieure de ladite partie supérieure du joint d'étanchéité.

### 5. Exposé des figures

D'autres caractéristiques et avantages de l'invention apparaîtront plus clairement à la lecture de la description suivante d'un mode de réalisation de l'invention, donnée à titre de simple exemple illustratif et non limitatif et des dessins annexés parmi lesquels :
- la figure 1 est une vue éclatée de l'ensemble formant la structure d'une porte de véhicule selon l'invention ;
- la figure 2 est une vue éclatée de l'ensemble vitré de la figure 1 ;
- la figure 3 est une vue en coupe de la partie supérieure d'une porte de véhicule selon l'invention ;
- la figure 4 est une vue en coupe de la partie latérale arrière d'une porte de véhicule selon l'invention ;
- la figure 5 illustre de façon schématique les étapes d'un exemple de mise en œuvre du procédé de fabrication d'une porte de véhicule automobile conforme à l'invention.

### 6. Description détaillée d'un mode de réalisation

L'invention concerne donc une nouvelle technique permettant de réaliser une porte (porte latérale, porte arrière, hayon, porte de cabine...) de véhicule automobile dont la vitre, ou panneau mobile, est parfaitement alignée et affleurante avec la carrosserie.

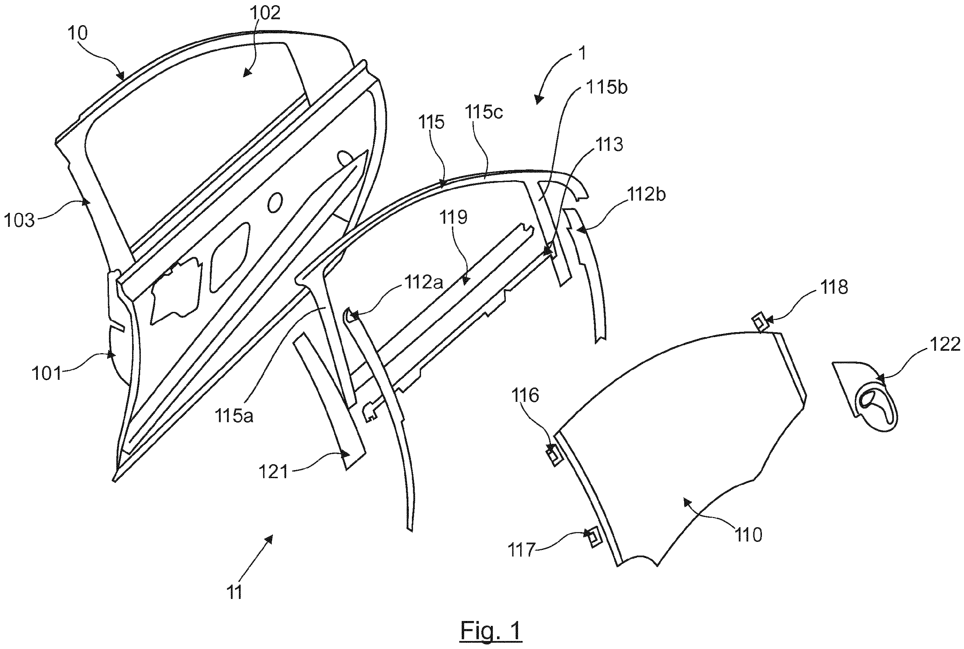

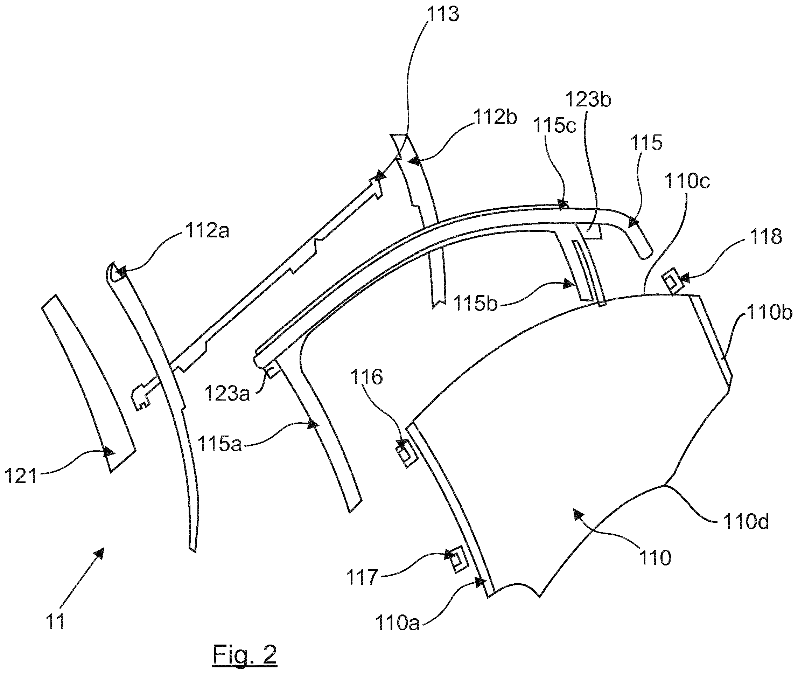

Comme le montrent les figures 1 et 2, le mode de réalisation décrit ci-après concerne une porte latérale avant d'un véhicule. Cependant, bien sûr, la même approche peut être mise en œuvre sur d'autres portes d'un véhicule.

Cette porte de véhicule automobile, et, en particulier, sa partie vitrée, est affleurante ("flush" en anglais), c'est-à-dire qu'aucun cadre ou élément de cadre ne fait saillie vers l'extérieur du véhicule, par rapport au plan de cette partie vitrée.

Cette porte 1 comprend classiquement un caisson, ou châssis, de porte 10, formant la structure de cette porte. Le caisson 10 comprend un cadre supérieur 103, qui définit une ouverture 102, et qui est relié à une partie inférieure 101. Sur les figures, l'élément extérieur de la carrosserie est omis, pour laisser apparaître l'intérieur de la partie inférieure 101 du caisson 10, qui comprend notamment des éléments de réception et de maintien de la partie vitrée 11.

Cette partie vitrée 11 est réalisée de façon indépendante, comme illustré par la figure 2, et assemblée ensuite au caisson 10, pour former la porte 1.

La partie vitrée 11 comprend un cadre présentant une traverse supérieure, formée par la partie supérieure 115_{c} d'un joint d'étanchéité 115, la partie supérieure 115_{c} reliant deux montants formé chacun par un rail 112_{A}, 112_{B}, de guidage en coulissement d'un panneau vitré mobile 110, et une traverse centrale 113.

Le joint d'étanchéité 115 se présente sous la forme d'une bande continue. La courbure de sa partie supérieure 115_{c} correspond à celle du cadre supérieur 103 du caisson 10, cette partie supérieure 115_{c} formant traverse.

Le joint d'étanchéité 115 comprend en outre deux branches 115_{A}, 115_{B} rectilignes s'étendent parallèlement à partir de cette partie supérieure 115_{c}.

Le panneau vitré, ou vitre, mobile 110, peut être déplacée selon une direction sensiblement verticale entre:
- une position fermée ou d'obturation, où il obture l'ouverture 102 ménagée dans le cadre supérieur 103 du caisson 10, son pourtour inférieur 110_{D} restant inséré dans l'épaisseur (c'est-à-dire dans la partie inférieure 101) du caisson 10, le bord supérieur 110_{C} venant en contact contre une ou plusieurs lèvres d'étanchéité de vitre 115e qui seront décrites par la suite, les bords avant 110_{B} et arrière 110_{A} étant situés dans les rails 112_{A}, 112_{B};
- une position ouverte, où il libère l'ouverture 102 et est complètement ou partiellement rentrée dans l'épaisseur du caisson 10, et
- des positions intermédiaires.

On note que les rails 112_{A}, 112_{B} constituent, comme la partie supérieure 115_{c} du joint d'étanchéité 115 lorsque cette dernière est rigide, des éléments structurants de la partie vitrée 11.

Les deux rails 112_{A}, 112_{B}, qui sont fabriqués en plastique, en aluminium, en acier ou tout autre matériau adapté, sont montés par vissage, rivetage, clippage ou toute autre technique adaptée sur deux pattes de fixation 123_{A}, 123_{B} solidaires du joint d'étanchéité 115.

La partie vitrée 11 est assemblée indépendamment du caisson 10 de porte, puis monté sur ce dernier par fixation du joint d'étanchéité 115 formant la traverse supérieure et des rails 112_{A}, 112_{B} sur le caisson 10.

On dispose alors d'une porte 1 pouvant être montée directement sur le véhicule.

Afin d'assurer l'étanchéité entre le caisson 10 de la porte 1 et le panneau vitré mobile 110 lorsque ce dernier est en position fermée (de façon à éviter que de l'eau ou d'autres éléments pénètrent à l'intérieur du véhicule), il est prévu une ou plusieurs lèvres d'étanchéité de vitre 115e sur le joint d'étanchéité 115 (appelé coulisse) périphérique, et plus particulièrement sur la partie supérieure 115_{C} et les deux branches 115_{A}, 115_{B} du joint d'étanchéité 115, qui viennent en contact avec le contour du panneau vitré mobile 110.

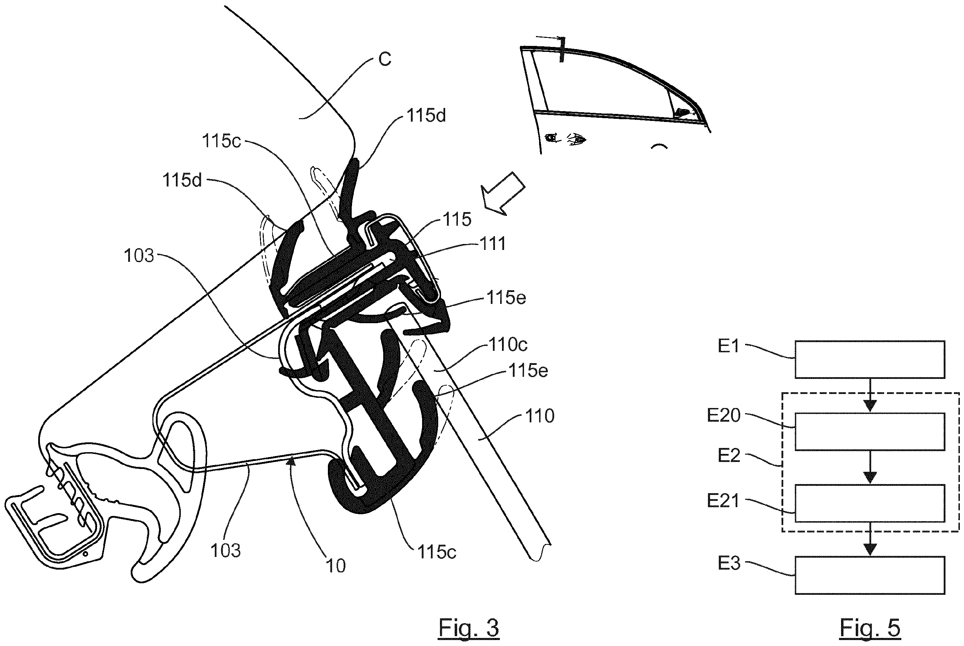

Une ou plusieurs lèvres d'étanchéité de porte 115d sont disposées sur le dessus (c'est-à-dire sur la surface supérieure) de la partie supérieure 115_{C} de manière à se trouver comprimées entre la partie supérieure 115_{C} du joint d'étanchéité 115 et la carrosserie du véhicule (référencée "C" sur la figure 3) lorsque la porte 1 est fermée, ce qui assure une bonne étanchéité.

La ou les lèvres d'étanchéité de porte 115d et la ou les lèvres d'étanchéité de vitre 115e sont fabriquées en une seule pièce avec la partie supérieure 115_{C} et les deux branches 115_{A}, 115_{B}.

La partie supérieure 115_{C} du joint d'étanchéité 115 est soit rigide et constitue alors un élément structurant présentant une résistance mécanique relativement élevée et exerçant une fonction de rigidification du cadre, soit souple.

Lorsque la partie supérieure 115_{C} est rigide, celle-ci forme a elle seule la traverse supérieure du cadre.

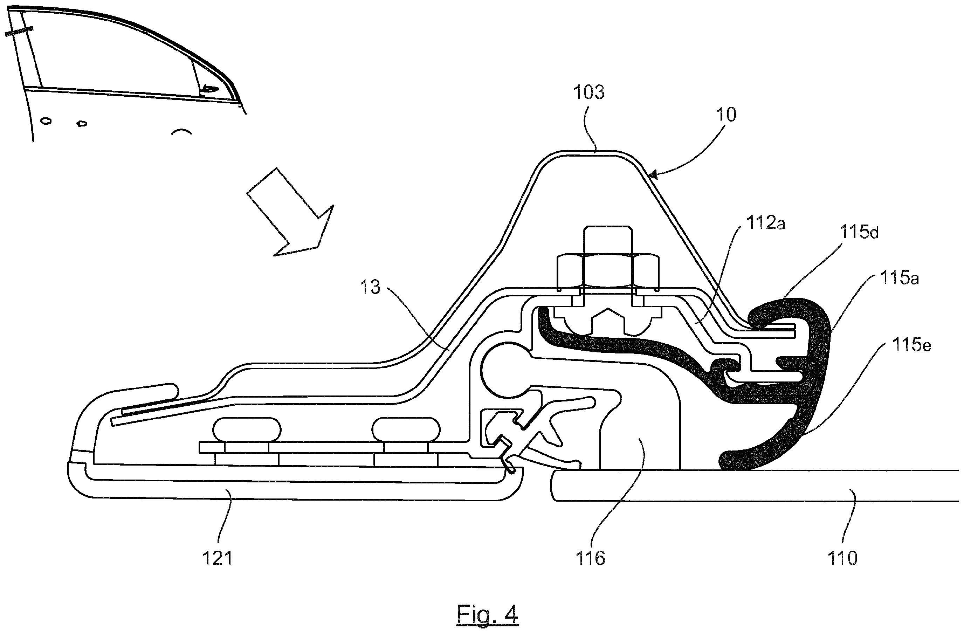

Comme illustré sur les vues en coupe des figures 3 et 4, la ou les lèvres d'étanchéité de vitre 115e sont fixées sur le dessous (c'est-à-dire sur la surface inférieure) de la partie supérieure 115_{C} et sur le bord intérieur des rails 112_{A}, 112_{B}, de manière à se trouver dissimulées en dessous du panneau vitré mobile 110 quand celui-ci est fermé.

La ou les lèvres d'étanchéité de vitre 115e sont alors comprimées entre le cadre supérieur 103 du caisson 10 et le panneau vitré mobile 110, ce qui assure une bonne étanchéité.

On note, dans l'exemple illustré sur la figure 3, que les quatre lèvres d'étanchéité de vitre 115e viennent en contact avec le bord supérieur 110_{C} du panneau vitré mobile 110, qui est fermé.

On note, par ailleurs, sur la figure 3, que la partie supérieure 115_{C} du joint d'étanchéité 115 présente une gorge intérieure 111 en forme de U dans laquelle vient se loger un bord du cadre supérieur 103 du caisson 10 lors du montage de la partie vitrée 11 sur le caisson 10.

Le panneau vitré mobile 110 est entraîné en déplacement par des moyens d'entraînement (non représentés), par exemple un mécanisme à crémaillère, actionné lui-même à un moteur électrique.

D'autres moyens d'entraînement, y compris des moyens d'entraînement manuels, peuvent bien sûr être mis en œuvre.

Des patins de guidage sont fixés sur la face du panneau vitré mobile 110 orientée vers l'intérieur du véhicule. Ces patins de guidage sont destinés à coopérer avec les rails 112_{A}, 112_{B} et guider les bords arrière 110_{A} et avant 110_{B} du panneau vitré mobile 110 dans les rails 112_{A}, 112_{B}. En pratique, ces patins ne sont généralement pas visibles de l'extérieur (la zone correspondante étant sérigraphiée). Dans ce mode de réalisation, deux patins 116 et 117 sont prévus pour coopérer avec le rail 112_{A} orienté vers l'arrière, et un patin unique 118 est prévu pour coopérer avec le rail 112_{B} orienté vers l'avant.

Les rails de guidage 112_{A}, 112_{B} assurent la double fonction de guidage en translation et de louvoiement. Ce louvoiement, qui n'est pas impératif dans tous les modes de réalisation, permet de décaler légèrement le panneau vitré mobile 110 vers l'extérieur, avant qu'il soit déplacé en translation, de façon à le dégager du joint d'étanchéité 115, pour faciliter le déplacement et limiter la détérioration de ce dernier.

On note, sur la figure 4, que le patin 116 fixé au panneau vitré mobile 110 est disposé dans le rail 112_{A} et que la branche 115_{A} du joint d'étanchéité 115 est clippée sur le bord du rail 112_{A} orienté vers le panneau vitré mobile 110.

La branche 115_{A} du joint d'étanchéité 115 présente une première lèvre de vitre 115e venant en contact avec le bord arrière 110_{A} du panneau vitré mobile 110, qui est fermé, et une deuxième lèvre de porte 115d venant recouvrir le cadre du caisson 10.

On comprend que, de la même façon, la branche 115_{B} du joint d'étanchéité de vitre 115 se trouvant sur le rail 112_{B}, présente une lèvre de vitre 115e venant en contact avec le bord avant 110_{B} du panneau vitré mobile 110 et une lèvre de porte 115d venant recouvrir le cadre du caisson 10.

Le cadre de la partie vitrée 11 porte en outre :
- une traverse centrale 113 reliant les rails de guidage 112_{A}, 112_{B} et qui est vissée, par exemple, sur le haut de la partie inférieure 101 du caisson 10, et
- un joint d'étanchéité, à savoir un lécheur intérieur 119 (fixé sur la traverse centrale 113) qui est destiné à venir en contact avec la surface intérieure du panneau vitré mobile 110 et qui a pour but d'éviter que de l'eau ou d'autres éléments pénètrent dans l'épaisseur du caisson 10.

Le cadre de la partie vitrée 11 porte en outre, dans cet exemple, un élément enjoliveur 121 s'étendant dans le plan du panneau vitré mobile 110 lorsqu'il est dans la position fermée (ou d'obturation), et une embase 122 de rétroviseur extérieur.

La portière peut porter un store d'occultation.

L'ensemble vitré peut également comprendre un ou plusieurs panneau(x) vitré(s) fixe(s), ou custode(s).

Dans un mode de réalisation particulier, le panneau vitré mobile porte, sur sa face orientée vers l'intérieur du véhicule, deux patins de guidage montés chacun coulissant par rapport à un rail de guidage.

Dans un autre mode de réalisation particulier, le panneau vitré mobile porte un unique patin de guidage coopérant avec un des deux rails de guidage dans lesquels coulisse le panneau vitré mobile.

La figure 5 illustre de façon schématique les étapes d'un exemple de mise en œuvre du procédé de fabrication d'une porte de véhicule automobile conforme à l'invention.

Dans cet exemple, le procédé comprend les étapes suivantes :
- fabrication (étape E1) d'un caisson de porte 10 ;
- fabrication (étape E2) d'un dispositif vitré 11 comprenant au moins un panneau vitré mobile 110 et des rails de guidage 112_{A}, 112_{B} en coulissement du panneau vitré mobile 110 entre une position d'obturation et au moins une position d'ouverture, le panneau vitré mobile 110 portant, sur sa face orientée vers l'intérieur du véhicule, au moins un patin de guidage 116, 117, 118 monté coulissant par rapport à un des rails de guidage 112_{A}, 112_{B}, les rails de guidage 112_{A}, 112_{B} étant reliés en leur partie supérieure par une traverse supérieure formée par la partie supérieure 115_{C} d'un joint d'étanchéité 115,
- assemblage (étape E3) du caisson de porte 10 et du dispositif vitré 11.

On note que l'étape de fabrication (E2) du dispositif vitré 11 comprend :
- une étape de fabrication (E20), en une seule pièce, de la partie supérieure 115_{C} formant traverse et des deux branches 115_{A}, 115_{B} du joint d'étanchéité 115, la partie supérieure 115_{C} portant une ou des lèvres d'étanchéité de porte 115d, et une ou des lèvres d'étanchéité de vitre 115e.
- une étape de pose (E21) des rails de guidage 112_{A}, 112_{B} sur deux pattes de fixation 123_{A}, 123_{B} du joint d'étanchéité 115, les rails de guidage (112_{A}, 112_{B}) étant fixés sur les deux pattes de fixation 123_{A}, 123_{B} par vissage, rivetage, ou clippage, par exemple.

On note, par ailleurs, que l'étape d'assemblage (E3) du caisson de porte 10 et du dispositif vitré 11 comprend une étape d'insertion d'un bord du caisson de porte 10 dans la fente 111_{A} de la partie supérieure 115_{C} du dispositif d'étanchéité 115.

De nombreux ajouts ou variantes au mode de réalisation décrit plus haut peuvent bien sûr être envisagés.

## Revendications

1. Dispositif vitré (11) destiné à être assemblé à un caisson de porte (10) pour former une porte (1) de véhicule automobile, comprenant un cadre présentant une traverse supérieure reliant deux montants formé chacun par un rail (112_{A}, 112_{B}) de guidage en coulissement d'au moins un panneau vitré mobile (110), entre une position d'obturation et au moins une position d'ouverture, ledit panneau vitré mobile (110) portant, sur sa face orientée vers l'intérieur du véhicule, au moins un patin de guidage (116, 117, 118) monté coulissant par rapport à un desdits rails de guidage (112_{A}, 112_{B}),
le dispositif vitré (11) comprenant en outre un joint d'étanchéité (115) comprenant une partie supérieure (115_{C}) rigide formant ladite traverse supérieure du cadre, ladite partie supérieure (115_{C}) rigide portant des premiers moyens d'étanchéité (115d) destinés à venir en contact avec la carrosserie (C) du véhicule lorsque la porte (1) est fermée, et des seconds moyens d'étanchéité (115_{C}) destinés à venir en contact avec le panneau vitré mobile (110), ladite partie supérieure (115_{C}) rigide, les premiers moyens d'étanchéité (115d) de porte et les seconds moyens d'étanchéité (115e) de vitre étant fabriqués en une seule pièce, ledit joint d'étanchéité (115) comprenant deux pattes de fixation (123_{A}, 123_{B}) des rails de guidage (112_{A}, 112_{B}) audit joint d'étanchéité (115), et les deux pattes de fixation (123_{A}, 123_{B}) sont surmoulées sur ledit joint d'étanchéité (115).

2. Dispositif vitré (11) selon la revendication 1, **caractérisé en ce que** ledit joint d'étanchéité (115) comprend deux branches (115_{A}, 115_{B}) s'étendant parallèlement à partir de la partie supérieure (115_{C}) rigide et portant chacune des premiers moyens d'étanchéité (115d) de porte et des seconds moyens d'étanchéité (115e) de vitre.

3. Dispositif vitré (11) selon la revendication 2, **caractérisé en ce que** chacune des deux branches (115_{A}, 115_{B}) est solidaire d'un desdits rails de guidage (112_{A}, 112_{B}).

4. Dispositif vitré (11) selon la revendication 3, **caractérisé en ce que** les branches (115_{A}, 115_{B}) sont solidarisées par clippage sur lesdits rails de guidage (112_{A}, 112_{B}).

5. Dispositif vitré (11) selon l'une quelconque des revendications 1 à 4, **caractérisé en ce que** les premiers moyens d'étanchéité (115d) sont disposés sur la face supérieure de la partie supérieure (115_{C}) rigide du joint d'étanchéité (115) et **en ce que** les seconds moyens d'étanchéité (115e) sont disposés sur la face inférieure de la partie supérieure (115_{c}) du joint d'étanchéité (115).

6. Dispositif vitré (11) selon l'une quelconque des revendications 1 à 5, **caractérisé en ce que** ladite partie supérieure (115_{C}) rigide du joint d'étanchéité (115) comprend une gorge intérieure (111) dans laquelle est destinée à venir se loger un bord du caisson de porte (10).

7. Dispositif vitré (11) selon la revendication 6, **caractérisé en ce que** ladite gorge intérieure (111) est située entre la face supérieure et la face inférieure de ladite partie supérieure (115_{C}) du joint d'étanchéité (115).

8. Dispositif vitré (11) selon l'une quelconque des revendications 1 à 7, **caractérisé en ce qu'**il comprend une traverse inférieure (113) reliant les deux rails de guidage (112_{A}, 112_{B}) en leur partie inférieure et destinée à venir se fixer sur le caisson de porte (10).

9. Porte (1) de véhicule automobile, **caractérisée en ce qu'**elle comprend un dispositif vitré (11) selon l'une quelconque des revendications 1 à 8.

10. Véhicule automobile, **caractérisé en ce qu'**il comprend au moins un dispositif vitré (11) selon l'une quelconque des revendications 1 à 8.

11. Procédé de fabrication d'une porte (1) de véhicule automobile, **caractérisé en ce qu'**il comprend les étapes suivantes :
- fabrication (E1) d'un caisson de porte (10) ;
- fabrication (E2) d'un dispositif vitré (11) comprenant au moins un panneau vitré mobile (110) et des rails de guidage (112_{A}, 112_{B}) en coulissement dudit panneau vitré mobile (110) entre une position d'obturation et au moins une position d'ouverture, ledit panneau vitré mobile (110) portant, sur sa face orientée vers l'intérieur du véhicule, au moins un patin de guidage (116, 117, 118) monté coulissant par rapport à un desdits rails de guidage (112_{A}, 112_{B}), lesdits rails de guidage (112_{A}, 112_{B}) étant reliés en leur partie supérieure par une traverse supérieure formée par la partie supérieure (115_{C}) rigide d'un joint d'étanchéité (115),
- assemblage (E3) dudit caisson de porte (10) et dudit dispositif vitré (11), l'étape de fabrication (E2) du dispositif vitré (11) comprenant une étape de fabrication (E20), en une seule pièce, de la partie supérieure (115_{C}) rigide formant ladite traverse supérieure, de premiers moyens d'étanchéité de porte (115d) destinés à venir en contact avec la carrosserie du véhicule lorsque la porte (1) est fermée, et de seconds moyens d'étanchéité de vitre (115e) destinés à venir en contact avec le panneau vitré mobile (110), l'étape de fabrication (E2) du dispositif vitré (11) comprenant en outre une étape de pose (E21) des rails de guidage (112_{A}, 112_{B}) sur deux pattes de fixation (123_{A}, 123_{B}) surmoulées sur le joint d'étanchéité (115).

12. Procédé de fabrication selon la revendication 11, caractérisé en que les rails de guidage (112_{A}, 112_{B}) sont fixés sur les deux pattes de fixation (123_{A}, 123_{B}) par vissage, rivetage, ou clippage.

13. Procédé de fabrication selon la revendication 11 ou 12, caractérisé en que l'étape d'assemblage (E3) dudit caisson de porte (10) et dudit dispositif vitré (11) comprend une étape d'insertion d'un bord du caisson de porte (10) dans une gorge intérieure (111) de ladite partie supérieure du joint d'étanchéité (115).

## Patentansprüche

1. Verglasungsvorrichtung (11), die dazu bestimmt ist, an einem Türkasten (10) montiert zu werden, um eine Kraftfahrzeugtür (1) zu bilden, umfassend einen Rahmen, der eine obere Querstrebe aufweist, die zwei Träger verbindet, die jeweils von einer Führungsschiene (112_{A}, 112_{B}) zum Gleiten mindestens einer beweglichen Glasplatte (110) zwischen einer Schließposition und mindestens einer Öffnungsposition gebildet sind, wobei die bewegliche Glasplatte (110) auf ihrer zum Inneren des Fahrzeugs gewandten Seite mindestens einen Gleitschuh (116, 117, 118) trägt, der gleitend in Bezug zu den Führungsschienen (112_{A}, 112_{B}) montiert ist,
wobei die Verglasungsvorrichtung (11) ferner eine Dichtung (115) umfasst, die einen starren oberen Teil (115_{c}) aufweist, der die obere Querstrebe des Rahmens bildet, wobei der starre obere Teil (115_{C}) erste Dichtungsmittel (115d), die dazu bestimmt sind, mit der Karosserie (C) des Fahrzeugs in Kontakt zu kommen, wenn die Tür (1) geschlossen ist, und zweite Dichtungsmittel (115e) trägt, die dazu bestimmt sind, mit der beweglichen Glasplatte (110) in Kontakt zu kommen, wobei der starre obere Teil (115_{C}), die ersten Türdichtungsmittel (115d) und die zweiten Glasabdichtungsmittel (115e) in einem Stück hergestellt sind, wobei die Dichtung (115) zwei Befestigungsklauen (123_{A}, 123_{B}) der Führungsschienen (112_{A}, 112_{B}) an der Dichtung (115) umfasst und die zwei Befestigungsklauen (123_{A}, 123_{B}) auf die Dichtung (115) aufgeformt sind.

2. Verglasungsvorrichtung (11) nach Anspruch 1, **dadurch gekennzeichnet, dass** die Dichtung (115) zwei Schenkel (115_{A}, 115_{B}) umfasst, die sich parallel vom starren oberen Teil (115_{C}) aus erstrecken und jeweils erste Türdichtungsmittel (115d) und zweite Glasabdichtungsmittel (115e) tragen.

3. Verglasungsvorrichtung (11) nach Anspruch 2, **dadurch gekennzeichnet, dass** jeder der Schenkel (115_{A}, 115_{B}) mit einer der Führungsschienen (112_{A}, 112_{B}) verbunden ist.

4. Verglasungsvorrichtung (11) nach Anspruch 3, **dadurch gekennzeichnet, dass** jeder der zwei Schenkel (115_{A}, 115_{B}) durch Verklemmen auf den Führungsschienen (112_{A}, 112_{B}) befestigt ist.

5. Verglasungsvorrichtung (11) nach einem der Ansprüche 1 bis 4, **dadurch gekennzeichnet, dass** die ersten Dichtungsmittel (115d) auf der Oberseite des starren oberen Teils (115_{C}) der Dichtung (115) angeordnet sind, und dass die zweiten Dichtungsmittel (115e) auf der Unterseite des oberen Teils (115_{C}) der Dichtung (115) angeordnet sind.

6. Verglasungsvorrichtung (11) nach einem der Ansprüche 1 bis 5, **dadurch gekennzeichnet, dass** der starre obere Teil (115_{C}) der Dichtung (115) eine innere Nut (111) umfasst, in der ein Rand des Türkastens (10) angeordnet werden soll.

7. Verglasungsvorrichtung (11) nach Anspruch 6, **dadurch gekennzeichnet, dass** die innere Nut (111) zwischen der Oberseite und der Unterseite des oberen Teils (115_{C}) der Dichtung (115) angeordnet ist.

8. Verglasungsvorrichtung (11) nach einem der Ansprüche 1 bis 7, **dadurch gekennzeichnet, dass** sie eine untere Querstrebe (113) umfasst, die die zwei Führungsschienen (112_{A}, 112_{B}) in ihrem unteren Teil verbindet und dazu bestimmt ist, auf dem Türkasten (10) befestigt zu sein.

9. Kraftfahrzeugtür (1), **dadurch gekennzeichnet, dass** sie eine Verglasungsvorrichtung (11) nach einem der Ansprüche 1 bis 8 umfasst.

10. Kraftfahrzeug, **dadurch gekennzeichnet, dass** es mindestens eine Verglasungsvorrichtung (11) nach einem der Ansprüche 1 bis 8 umfasst.

11. Verfahren zur Herstellung einer Kraftfahrzeugtür (1), **dadurch gekennzeichnet, dass** es die folgenden Schritte umfasst:
- Herstellung (E1) eines Türkastens (10);
- Herstellung (E2) einer Verglasungsvorrichtung (11), umfassend mindestens eine bewegliche Glasplatte (110) und Führungsschienen (112_{A}, 112_{B}) zum Gleiten der beweglichen Glasplatte (110) zwischen einer Schließposition und mindestens einer Öffnungsposition, wobei die bewegliche Glasplatte (110) auf ihrer zum Inneren des Fahrzeugs gewandten Seite mindestens einen Gleitschuh (116, 117, 118) trägt, der gleitend in Bezug zu den Führungsschienen (112_{A}, 112_{B}) montiert ist, wobei die Führungsschienen (112_{A}, 112_{B}) in ihrem oberen Teil durch eine obere Querstrebe verbunden sind, die von dem starren oberen Teil (115_{C}) einer Dichtung (115) gebildet ist,
- Zusammenbau (E3) des Türkastens (10) und der Verglasungsvorrichtung (11),
wobei der Schritt der Herstellung (E2) der Verglasungsvorrichtung (11) einen Schritt der einstückigen Herstellung (E20) des starren oberen Teils (115_{C}), der die obere Querstrebe bildet, der ersten Türdichtungsmittel (115d), die dazu bestimmt sind, mit der Karosserie des Fahrzeugs in Kontakt zu kommen, wenn die Tür (1) geschlossen ist, und von zweiten Glasabdichtungsmitteln (115e) umfasst, die dazu bestimmt sind, mit der beweglichen Glasplatte (110) in Kontakt zu kommen, wobei der Schritt der Herstellung (E2) der Verglasungsvorrichtung (11) ferner einen Schritt des Verlegens (E21) der Führungsschienen (112_{A}, 112_{B}) auf zwei Befestigungsklauen (123_{A}, 123_{B}), die auf die Dichtung (115) aufgeformt sind, umfasst.

12. Herstellungsverfahren nach Anspruch 11, **dadurch gekennzeichnet, dass** die Führungsschienen (112_{A}, 112_{B}) auf den zwei Befestigungsklauen (123_{A}, 123_{B}) durch Schrauben, Nieten oder Verklemmen befestigt sind.

13. Herstellungsverfahren nach Anspruch 11 oder 12, **dadurch gekennzeichnet, dass** der Schritt des Zusammenbaus (E3) des Türkastens (10) und der Verglasungsvorrichtung (11) einen Schritt des Einsetzens eines Randes des Türkastens (10) in eine innere Nut (111) des oberen Teils der Dichtung (115) umfasst.

## Claims

1. Glazed device (11) intended to be assembled with a door casing (10) for forming a motor vehicle door (1), including a frame having an upper cross member connecting two jambs each formed by a sliding guide rail (112_{A}, 112_{B}) of at least one mobile glazed panel (110,) between a closed position and at least one open position, said mobile glazed panel (110) having, on its face oriented toward the interior of the vehicle, at least one guide glide (116, 117, 118) slidably mounted with respect to one of said guide rails (112_{A}, 112_{B}),
the glazed device (11) further comprises at least one sealing device (115) comprising a rigid upper portion (115_{C}) forming said upper cross member of the frame, said rigid upper portion (115_{C}) carrying first sealing means (115d) intended to come into contact with the vehicle body (C) when the door (1) is closed, and second sealing means (115e) intended to come into contact with the mobile glazed panel (110),
said rigid upper portion (115c), the first door sealing means (115d) and the second glazing sealing means (115e) being made of a single piece,
said sealing device (115) comprising to fastening lugs (123_{A}, 123_{B}) of the guide rails (112_{A}, 112_{B}) to said sealing device (115),
and the two fastening lugs (123_{A}, 123_{B}) being overmolded on said sealing device (115).

2. Glazed device (11) according to claim 1, **characterized in that** said sealing device (115) comprises two branches (115_{A}, 115_{B}) extending parallel from the rigid upper portion (115_{C}) and each carrying first door sealing means (115d) and second glazing sealing means (115e).

3. Glazed device (11) according to claim 2, **characterized in that** each one of the two branches (115_{A}, 115_{B}) is integral with one of said guide rails (112_{A}, 112_{B}).

4. Glazed device (11) according to claim 3, **characterized in that** the branches (115_{A}, 115_{B}) are made integral via clipping on said guide rails (112_{A}, 112_{B}) .

5. Glazed device (11) according to any one of claims 1 to 4, **characterized in that** the first sealing means (115d) are arranged on the upper face (111_{B}) of the rigid upper portion (115c) of the sealing device (115) and **in that** the second sealing means (115) are arranged on the lower face (111_{C}) of the rigid upper portion (115_{C}) of the sealing device (115).

6. Glazed device (11) according to any one of claims 1 to 5, **characterized in that** said rigid upper portion (115_{C}) of the sealing device (115) includes a slot (111_{A}) in which an edge of the door casing (10) is intended to be housed.

7. Glazed device (11) according to claim 6, **characterized in that** said slot (111_{A}) is located between the upper face (111_{B}) and the lower face (111_{C}) of said rigid upper portion (115c) of the sealing device (115).

8. Glazed device (11) according to any one of claims 1 to 7, **characterized in that** it includes a lower cross member (113) connecting the two guide rails (112_{A}, 112_{B}) in their lower portion and intended to be attached to the door casing (10).

9. Motor vehicle door (1), **characterized in that** it includes a glazed device (11) according to any one of claims 1 to 8.

10. Motor vehicle, **characterized in that** it includes at least one glazed device (11) according to any one of claims 1 to 8.

11. Method for producing a motor vehicle door (1), **characterized in that** it includes the following steps:
- production (E1) of a door casing (10);
- production E2) of a glazed device (11) including at least one mobile glazed panel (110) and guide rails (112_{A}, 112_{B}) by sliding said mobile glazed panel (110) between a closed position and at least one open position, said mobile glazed panel (110) having, on its face oriented toward the interior of the vehicle, at least one guide glide (116, 117, 118) slidably mounted with respect to one of said guide rails (112_{A}, 112_{B}), said guide rails (112_{A}, 112_{B}) being connected in their upper portion by an upper cross member formed by the rigid upper portion (115c) of a sealing device (115),
- assembly (E3) of said door casing (10) and said glazed device (11),
said step (E2) of producing the glazed device (11) including a step of production (E20), in a single piece, of the rigid upper portion (115_{C}) forming said cross member, of first door sealing means (115d) intended to come into contact with the vehicle body when the door (1) is closed, and second glazing sealing means (115e) intended to come into contact with the mobile glazed panel (110),
the step of manufacturing (E2) of the glazed device (11) further comprising a step of placing (E21) of the guide rails (112_{A}, 112_{B}) on two fastening lugs (123_{A}, 123_{B}) overmolded on said sealing device (115).

12. Production method according to claim 11, **characterized in that** the guide rails (112_{A}, 112_{B}) are fastened on the fastening lugs (123_{A}, 123_{B}) by screwing, riveting or clipping.

13. Production method according to claim 11 or 12, **characterized in that** the step of assembly (E3) of said door casing (10) and of said glazed device (11) comprises a step of inserting an edge of the door casing (10) into a slot (111_{A}) of said upper portion (115_{C}) of the sealing device (115).
